Europäisches Patentamt

European Patent Office

Office européen des brevets

(19)

(11) **EP 1 299 701 B1**

(12) **EUROPÄISCHE PATENTSCHRIFT**

(45) Veröffentlichungstag und Bekanntmachung des Hinweises auf die Patenterteilung:
**14.07.2004 Patentblatt 2004/29**

(21) Anmeldenummer: **01951515.4**

(22) Anmeldetag: **23.05.2001**

(51) Int Cl.$^7$: **G01L 9/00**, G01L 13/02

(86) Internationale Anmeldenummer:
**PCT/EP2001/005929**

(87) Internationale Veröffentlichungsnummer:
**WO 2002/006785 (24.01.2002 Gazette 2002/04)**

(54) **DIFFERENZDRUCKAUFNEHMER**

DIFFERENTIAL PRESSURE SENSOR

CAPTEUR DE PRESSION DIFFERENTIELLE

(84) Benannte Vertragsstaaten:
**AT BE CH CY DE DK ES FI FR GB GR IE IT LI LU MC NL PT SE TR**

(30) Priorität: **13.07.2000 EP 00115175**

(43) Veröffentlichungstag der Anmeldung:
**09.04.2003 Patentblatt 2003/15**

(73) Patentinhaber: **Endress + Hauser GmbH + Co. KG.
79689 Maulburg (DE)**

(72) Erfinder:
• **BURCZYK, Dietfried
14513 Teltow (DE)**
• **DANNHAUER, Wolfgang
14513 Teltow (DE)**

• **LÖFFLER, Frank
14480 Potsdam (DE)**
• **NÜRNBERGER, Ralf
14473 Potsdam (DE)**
• **SCHWABE, Friedrich
14532 Kleinmachnow (DE)**

(74) Vertreter: **Andres, Angelika
Endress + Hauser (Deutschland) Holding GmbH,
Colmarer Strasse 6
79576 Weil am Rhein (DE)**

(56) Entgegenhaltungen:
**DE-A- 2 712 846        DE-A- 4 244 257
US-A- 4 713 969**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft einen Differenzdruckaufnehmer

- mit einem Sensorelement
- mit einer ersten und einer zweiten jeweils an das Sensorelement angrenzenden Druckmeßkammer,
- einer ersten von einer ersten Trennmembran abgeschlossenen ersten Druckempfangskammer,
- einer zweiten von einer zweiten Trennmembran abgeschlossenen zweiten Druckempfangskammer,
- einer ersten Überlastkammer,

  -- die mit einer ersten Leitung mit der ersten Druckempfangskammer verbunden ist und
  -- die mit einer zweiten Leitung mit der ersten Druckmeßkammer verbunden ist

- einer zweiten Überlastkammer,

  -- die mit einer dritten Leitung mit der zweiten Druckempfangskammer verbunden ist und
  -- die mit einer vierten Leitung mit der zweiten Druckmeßkammer verbunden ist,

- einer die erste und die zweite Druckempfangskammer, die erste und die zweite Überlastkammer, die erste und die zweite Druckmeßkammer, sowie die erste, die zweite, die dritte und die vierte Leitung ausfüllende Flüssigkeit, und
- einer Überlastmembran,

  -- durch die die erste und die zweite Überlastkammer voneinander getrennt sind.

Druckaufnehmer sind üblicherweise über Prozeßanschlüsse anschließbar, so daß ein erster Druck auf die erste Trennmembran und ein zweiter Druck auf die zweite Trennmembran einwirkt. Die Drücke werden über die Flüssigkeit in die Druckmeßkammern übertragen und liegen am Sensorelement an. Das Sensorelement, z.B. eine piezoresistive Differenzdruckmeßzelle, gibt ein Ausgangssignal ab, das proportional zu der Differenz des ersten und des zweiten Drucks ist. Das Ausgangssignal steht zu einer weiteren Verarbeitung, Auswertung und/oder Anzeige zur Verfügung.

Differenzdruckaufnehmer werden zur Messung der Prozeßgröße Differenzdruck in einer Vielzahl von Anwendungen eingesetzt. Neben der Meßgröße Differenzdruck als solches ist mit einem Differenzdruckaufnehmer auch aufgrund einer hydrostatischen Druckdifferenz ein Füllstand in einem Behälter bestimmbar. Genauso kann z.B. aus der Druckdifferenz zwischen zwei verschiedenen Orten unterschiedlichen Querschnitts in einem Gerinne ein Durchfluß bestimmt werden.

In der DE-A 42 44 257 ist ein Differenzdruckaufnehmer beschrieben mit

- einem Sensorelement,
- einer ersten und einer zweiten jeweils an das Sensorelement angrenzenden Druckmeßkammer,
- einer ersten von einer ersten Trennmembran abgeschlossenen ersten Druckempfangskammer,
- einer zweiten von einer zweiten Trennmembran abgeschlossenen zweiten Druckempfangskammer,
- einer ersten Überlastkammer,

  -- die mit einer ersten Leitung mit der ersten Druckempfangskammer verbunden ist und
  -- die mit einer zweiten Leitung mit der ersten Druckmeßkammer verbunden ist

- einer zweiten Überlastkammer,

  -- die mit einer dritten Leitung mit der zweiten Druckempfangskammer verbunden ist und
  -- die mit einer vierten Leitung mit der zweiten Druckmeßkammer verbunden ist,

- einer die erste und die zweite Druckempfangskammer, die erste und die zweite Überlastkammer, die erste und die zweite Druckmeßkammer, sowie die erste, die zweite, die dritte und die vierte Leitung ausfüllende Flüssigkeit, und
- einer Überlastmembran,

  -- durch die die erste und die zweite Überlastkammer voneinander getrennt sind.

Bei dem beschriebenen Druckaufnehmer ist die Überlastmembran scheibenförmig und an deren äußerem Rand fest eingespannt.

Im Überlastfall, d.h. wenn auf eine der Trennmembranen ein Druck einwirkt, der größer als ein zulässiger oberer Grenzwert ist, für den der Druckmeßaufnehmer ausgelegt ist, wird die Trennmembran gegen deren Membranbett gedrückt. Das durch die Auslenkung der Trennmembran verdrängte Flüssigkeitsvolumen gelangt durch eine der Leitungen von der Druckeinlaßkammer in die zugeordnete Überlastkammer und führt zu einer Auslenkung der Überlastmembran aus deren Nullage. In dem durch die Auslenkung der Überlastmembran einseitig zusätzlich zur Verfügung stehenden Volumen wird während der Dauer der Überlast zumindest ein Teil des verschobenen Flüssigkeitsvolumens aufgenommen. Der Druck der im Überlastfall auf das Sensorelement einwirkt ist hierdurch begrenzt und das Sensorelement vor einer Überbelastung geschützt.

DE-A-27 12 846 beschreibt einen Differenzdruckaufnehmer mit einem Sensorelement und angrenzenden Druckempfangskammern, die gegenüber dem zu messenden Medium über je eine Trennmembran abgetrennt sind. Die beiden Druckempfangskammern sind über Leitungen mit je einer Überlastmeßkammer verbunden, wobei die beiden Überlastmeßkammern durch eine ringförmige Überlastmembran voneinander getrennt sind. Diese Überlastmembran ist entlang ihres äußeren Randes am Gehäuse des Differenzdruckaufnehmers und entlang ihres inneren Randes an einer auslenkbaren Nabe eingespannt.

Im Oberlastfall können sehr schnell sehr große Kräfte auf die Überlastmembran einwirken. Vor allem an der Einspannung der Überlastmembran an deren äußeren Rand treten sehr große Spannungen auf, die plastische, also auch nach Abklingen der Überlast bleibende, Verformungen zur Folge haben können. Entsprechend kehrt die Überlastmembran nicht in deren ursprüngliche Nullage zurück und beide Überlastkammern weisen ein gegenüber dem ursprünglichen Zustand geändertes Volumen auf. Der Unterschied der Volumina einer Überlastkammer vor und nach auftreten des Überlastfalls ist nachfolgend als Hysteresevolumen bezeichnet. Das Hysteresevolumen wirkt sich direkt auf die Druckverteilung im Druckaufnehmer aus und verfälscht damit das Meßergebnis.

Es ist eine Aufgabe der Erfindung, einen Differenzdruckaufnehmer der oben genannten Art anzugeben, der ein geringes Hysteresevolumen aufweist.

Hierzu besteht die Erfindung in einem Differenzdruckaufnehmer der eingangs genannten Art, bei dem die Überlastmembran einen geschlossenen äußeren Rand und einen geschlossenen inneren Rand aufweist und entlang deren äußerem und deren innerem Rand fest eingespannt ist, so daß der innere Rand und der äussere Rand der Überlastmembran nicht gegeneinander auslenkbar sind.

Gemäß einer Ausgestaltung der Erfindung ist die Überlastmembran ringscheibenförmig.

Gemäß einer weiteren Ausgestaltung ist jede Überlastkammer durch die Überlastmembran und eine dieser gegenüberliegende im wesentlichen konkave Wand begrenzt.

Gemäß einer Ausgestaltung der Erfindung ist eine der Leitungen durch die Mitte der Überlastmembran hindurchgeführt.

Ein Vorteil eines solchen Differenzdruckaufnehmers ist, daß er ein im Vergleich zu Druckaufnehmern mit scheibenförmigen Überlastmembranen sehr geringes Hysteresevolumen aufweist.

Ein um eine Distanz y aus seiner Nullage ausgelenktes infinitesimales Ringscheibensegment der Breite $\Delta r$ schließt unter sich ein Volumen $\Delta V = y(r)*(2\pi r \Delta r)$ ein, das proportional zu dessen Radius r ist. Gerade am äußeren Rand einer Überlastmembran auftretende plastische Verformungen haben daher einen großen Anteil am Hysteresevolumen.

Bei Überlast teilen sich die auf eine erfindungsgemäß ausgebildete Überlastmembran einwirkenden Kräfte anteilig auf deren innere und äußere Einspannung auf. Demgemäß sind an der äußeren Einspannung auftretende Spannungen und damit auch die daraus resultierenden plastischen Verformungen geringer als bei einer Trennmembran ohne innere Einspannung.

Die Erfindung und weitere Vorteile werden nun anhand der Zeichnungen, in denen ein Ausführungsbeispiel dargestellt ist, näher erläutert.

Fig. 1    zeigt einen Längsschnitt durch einen erfindungsgemäßen Differenzdruckaufnehmer;

Fig. 2    zeigt die maximale Auslenkung einer scheibenförmigen Überlastmembran als Funktion des Radius;

Fig. 3    zeigt die maximale Auslenkung einer ringscheibenförmigen Überlastmembran als Funktion des Radius

Fig. 4 zeigt    das in einem infinitesimalen ringzylindrischen Bereich enthaltene Volumen bei maximaler Auslenkung einer scheibenförmigen Überlastmembran als Funktion des Radius;

Fig. 5 zeigt    das in einem infinitesimalen ringzylindrischen Bereich enthaltene Volumen bei maximaler Auslenkung einer ringscheibenförmigen Überlastmembran als Funktion des Radius;

Fig. 6 zeigt    eine Verformung, d.h. Dehnung bzw. Stauchung einer scheibenförmigen Überlastmembran im Überlastfall; und

Fig. 7 zeigt    eine Verformung, d.h. Dehnung bzw. Stauchung einer ringscheibenförmigen Überlastmembran im Überlastfall.

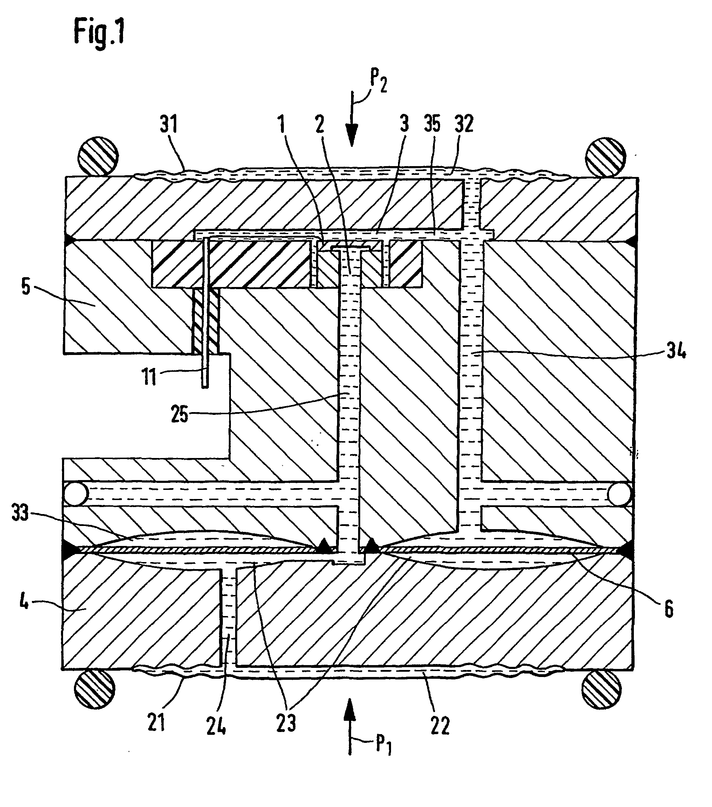

In Fig. 1 ist ein Längsschnitt durch einen Differenzdruckaufnehmer dargestellt. Der Differenzdruckaufnehmer besteht aus einer Druckaufnahmeeinheit, einem darauf angeordneten Träger für ein Sensorelement 1 und einem daran angrenzenden, in Fig. 1 nicht dargestellten, Gehäuse, z.B. zur Aufnahme einer Auswerteelektronik.

Das Sensorelement 1 ist z.B. ein Siliziumchip vom Membrantyp und es grenzen eine erste und eine zweite Druckmeßkammer 2, 3 an das Sensorelement 1 an. Ein in der ersten Druckmeßkammer 2 herrschender Druck liegt an einer Seite der Membran, ein in der zweiten Druckmeßkammer 3 herrschender Druck liegt an der gegenüberliegenden Seite der Membran an. Die resultierende Durchbiegung der Membran ist ein Maß für den auf sie einwirkenden Differenzdruck. Als elektromechanische Wandler dienen z.B. in die Membran integrierte zu einer Brückenschaltung zusammengefaßte piezoresistive Elemente, die ein differenzdruckproportionales Ausgangssignal erzeugen, zur Meßwerterzeugung. Das Ausgangssignal steht über eine Leitung 11 zu einer weiteren Verarbeitung und/oder Anzeige zur Verfügung.

Die Druckaufnahmeeinheit weist eine von einer ersten Trennmembran 21 abgeschlossene erste Druckempfangskammer 22 und eine von einer zweiten Trennmembran 31 abgeschlossene zweiten Druckempfangskammer 32 auf. Die Druckaufnahmeeinheit ist z. B. zwischen zwei in Fig. 1 nicht dargestellten Flanschen eingespannt, die jeweils einen Prozeßanschluß aufweisen, durch den ein Meßmedium der jeweiligen Trennmembran 21, 31 zuführbar ist.

Die Druckaufnahmeeinheit weist zwei miteinander verbundene massive Blocks 4, 5, zwischen denen eine Überlastmembran 6 angeordnet ist. Zu beiden Seiten der Überlastmembran 6 weist der jeweils benachbarte Block 4, 5 eine Ausnehmung aus. Die Ausnehmungen weisen die gleiche Grundfläche auf wie die Überlastmembran und deren Wand ist im wesentlichen konkav.

Die Überlastmembran 6 und die dieser gegenüberliegende Wand der in dem Block 4 angeordneten Ausnehmung begrenzen eine erste Überlastkammer 23, die mit einer ersten Leitung 24 mit der ersten Druckempfangskammer 22 verbunden ist. Eine zweite Leitung 25 bildet eine Verbindung zwischen der ersten Überlastkammer 23 und der ersten Druckmeßkammer 2.

Entsprechend begrenzen die Überlastmembran 6 und die dieser gegenüberliegende Wand der in dem Block 5 angeordneten Ausnehmung eine zweite Überlastkammer 33, die mittels einer dritte Leitung 34 mit der zweiten Druckempfangskammer 32 verbunden ist.

Eine vierte Leitung 35 bildet eine Verbindung zwischen der zweiten Überlastkammer 33 und der zweiten Druckmeßkammer 3. Die erste und die zweite Überlastkammer 23, 33 sind durch die Überlastmembran 6 voneinander getrennt.

Die erste und die zweite Druckempfangskammer 22, 32, die erste und die zweite Überlastkammer 23, 33, die erste und die zweite Druckmeßkammer 2, 3, sowie die erste, die zweite, die dritte und die vierte Leitung 24, 25, 34, 35 sind mit einer Flüssigkeit ausgefüllt. Dies ist vorzugsweise eine möglichst inkompressible Flüssigkeit mit einem geringen thermischen Ausdehnungskoeffizienten, z.B. ein Silikonöl.

Die Überlastmembran 6 weist einen geschlossenen äußeren Rand und einen geschlossenen inneren Rand auf und ist entlang deren äußerem und deren innerem Rand fest eingespannt.

In dem in Fig. 1 dargestellten Ausführungsbeispiel ist die Überlastmembran ringscheibenförmig. Ihr innerer kreisförmiger Rand ist auf den Block 5 aufgeschweißt. Ihr äußerer ebenfalls kreisförmiger Rand ist sowohl mit dem Block 4 als auch mit dem Block 5 verschweißt. Durch diese Schweißverbindung sind auch die beiden Blocks 4, 5 mit einander verbunden.

Da die Überlastmembran 6 einen geschlossenen inneren Rand aufweist, ist es möglich, eine oder mehrere Leitungen durch die Überlastmembran 6 hindurch zu führen.

Bei dem in Fig. 1 dargestellten Ausführungsbeispiel verläuft die Leitung 25 von der ersten Überlastkammer 23 durch die Überlastmembran 6 hindurch. Dies bietet den Vorteil, daß lediglich der Block 5 sehr aufwendig in der Herstellung ist, während der Block 4 nur eine einzige Leitung, nämlich die erste Leitung 24 aufweist.

Es sind selbstverständlich auch andere Anordnungen der Leitungen möglich, bei denen Verbindungen von jeder der Überlastkammern 23, 33 zu der dieser zugeordneten Druckempfangskammer 22, 32 und zu der dieser zugeordneten Druckmeßkammer 2, 3 bestehen. Auch müssen die einzelnen Leitungen nicht vollständig getrennt voneinander verlaufen, sondern können miteinander verbunden sein bzw. Abschnitte aufweisen, die mehreren Leitungen gemeinsam sind. Dies ist z.B. bei den in Fig. 1 dargestellten Leitungen 34 und 35 der Fall.

Differenzdruckaufnehmer mit an deren geschlossenen äußerem und an deren geschlossenem inneren Rand eingespannter Überlastmembran 6 weisen gegenüber herkömmlichen Differenzdruckaufnehmern mit Überlastmembranen, die lediglich einen äußeren Rand aufweisen und bei denen lediglich der äußere Rand fest eingespannt ist bei gleichem im Überlastfall durch die Auslenkung der Überlastmembran 6 einseitig zusätzlich zur Verfügung stehenden Volumen ein sehr viel geringeres Hysteresevolumen auf. Dies wird am nachfolgenden beispielhaften Vergleich einer scheibenförmigen und einer ringscheibenförmigen Überlastmembran näher erläutert.

Die Möglichkeit der Durchführung von Leitungen, hier der Leitung 25, bietet den Vorteil, daß auf beiden Seiten des Druckaufnehmers eine direkte Druckzufuhr zum Sensorelement 1 möglich ist. Aufwendige Überleitungen, die insb. auch außerhalb des Druckaufnehmers verlaufen, sind bei einem erfindungsgemäßen Druckaufnehmer nicht mehr erforderlich. Dies führt zu einer erheblichen kontruktiven Vereinfachung gegenüber herkömmlichen Druckaufnehmern, die regelmäßig aufwendige Überleitungen aufweisen.

Diese konstruktive Vereinfachung geht einher mit einer Reduktion der im Druckaufnehmer zur Druckübertragung benötigten Flüssigkeitsmenge. Da die Flüssigkeit immer einen endlichen thermischen Ausdehnungskoeffizienten aufweist und eine temperaturbedingte Volumenänderung die Eigenschaften des Druckaufnehmers ändert, bedeutet eine Reduktion des Flüssigkeitsvolumens gleichzeitig eine Verbesserung der Meßgenauigkeit.

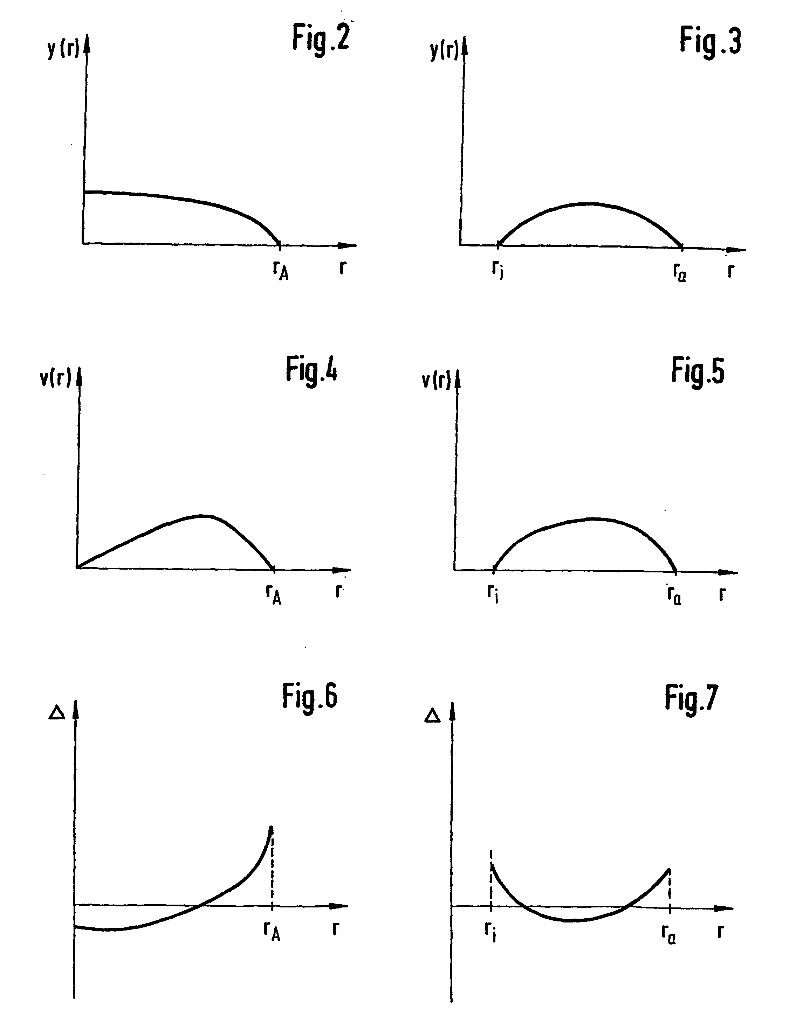

Fig. 2 zeigt die maximale Auslenkung y(r) einer scheibenförmigen Überlastmembran als Funktion des Radius. Die maximale Auslenkung y(r) weist in der Mitte der Membran ein Maximum auf und nimmt zu deren Rand hin ab. Am äußeren Rand der Überlastmembran, deren Außenradius mit $r_A$ bezeichnet ist, ist die Auslenkung immer gleich null. Demgegenüber weist eine ringscheibenförmige Überlastmembran eine maximale Auslenkung y(r) auf, deren Maximalwert zwischen deren Innenradius $r_i$ und deren Außenradius $r_a$ liegt. Fig. 3 zeigt die maximale Auslenkung einer ringscheibenförmigen Überlastmembran als Funktion des Radius. Die Auslenkung y(r) nimmt ausgehend vom Maximum in beide Richtungen hin ab und ist an deren innerem und an deren äußerem Rand $r_i$, $r_a$ gleich null.

Fig. 4 zeigt das in einem infinitesimalen ringzylindrischen Bereich mit dem Radius r enthaltene Volumen V(r) bei maximaler Auslenkung y(r) einer scheibenförmigen Überlastmembran als Funktion des Radius. Fig. 5 zeigt dieses Volumen V(r) bei maximaler Auslenkung y(r) einer ringscheibenförmigen Überlastmembran.

Das Volumen V(r) wird durch die Gleichung

$$V(r) = \int_{r-\delta r}^{r+\delta r} dr\ 2\,\pi\,r\ y(r)r$$

bestimmt. Das im Überlastfall durch die Auslenkung der Überlastmembran einseitig zusätzlich zur Verfügung stehende Volumen bei den genannten Überlastmembrantypen entspricht dem Integral über V(r), also der Fläche unter der Kurve. Damit wird deutlich, daß ein innen liegender Bereich mit geringem Radius einen geringen Anteil diesem zusätzlichen Volumen hat. Ein außen liegender Bereich hat einen großen Anteil an diesem zusätzlichen Volumen.

Eine an deren innerem Rand und an deren äußerem Rand fest eingespannte Überlastmembran, muß daher nur einen geringfügig größeren äußeren Durchmesser aufweisen, als eine lediglich an deren äußerem Rand eingespannte Überlastmembran, damit im Überlastfall das gleiche zusätzliche Volumen zur Verfügung steht. Das erforderliche Volumen ist durch das Volumen der Druckempfangskammern im unbelasteten Zustand, d.h. wenn kein Prozeßdruck anliegt, vorgegeben.

Tritt ein Überlastfall ein, so teilen sich die auf eine erfindungsgemäß ausgebildete Überlastmembran 6 einwirkenden Kräfte anteilig auf deren innere und äußere Einspannung auf. Demgemäß sind an der äußeren Einspannung auftretende Spannungen und damit auch die daraus resultierenden plastischen Verformungen geringer als bei einer Überlastmembran ohne innere Einspannung.

Die bleibenden Verformungen sind Dehnungen bzw. Stauchungen der Überlastmembran 6. Fig. 6 zeigt eine Verformung einer herkömmlichen scheibenförmigen Überlastmembran im Überlast fall. Fig. 7 zeigt unter gleichen Bedingungen die Verformung einer ringscheibenförmigen Überlastmembran. Es ist in beiden Figuren jeweils die Verformung Δ(r) in Abhängigkeit vom Radius r angegeben. Positive Werte von Δ(r) bedeuten eine Dehnung der Überlastmembran, negative Werte eine Stauchung.

Wie in Fig. 6 dargestellt, tritt am äußeren Rand der scheibenförmigen Überlastmembran eine starke Dehnung auf und in der Mitte eine Stauchung. Dazwischen liegt ein kontinuierlicher Übergang. Bei ringscheibenförmigen Überlastmembran tritt am äußeren und am inneren Rand eine Dehnung auf. Deren Amplitude ist jedoch deutlich geringer als bei einer scheibenförmigen Überlastmembran. Hierdurch ist das Hysteresevolumen einer ringscheibenförmigen Überlastmembran deutlich geringer als das einer scheibenförmigen Übermlastmembran.

**Patentansprüche**

**1.** Differenzdruckaufnehmer mit

- einem Sensorelement (1),
- einer ersten und einer zweiten jeweils an das Sensorelement (1) angrenzenden Druckmeßkammer (2, 3),
- einer ersten von einer ersten Trennmembran (21) abgeschlossenen ersten Druckempfangskammer (22),
- einer zweiten von einer zweiten Trennmembran (31) abgeschlossenen zweiten Druckempfangskammer (32),
- einer ersten Überlastkammer (23),

-- die mit einer ersten Leitung (24) mit der ersten Druckempfangskammer (22) verbunden ist und

-- die mit einer zweiten Leitung (25) mit der ersten Druckmeßkammer (2) verbunden ist

- einer zweiten Überlastkammer (33),

-- die mit einer dritten Leitung (34) mit der zweiten Druckempfangskammer (32) verbunden ist und

-- die mit einer vierten Leitung (35) mit der zweiten Druckmeßkammer (3) verbunden ist,

- einer die erste und die zweite Druckempfangskammer (2, 3), die erste und die zweite Überlastkammer (23, 33), die erste und die zweite Druckmeßkammer (2, 3), sowie die erste, die zweite, die dritte und die vierte Leitung (24, 25, 34, 35) ausfüllende Flüssigkeit, und

- einer Überlastmembran (6),

-- durch die die erste und die zweite Überlastkammer (23, 33) voneinander getrennt sind, wobei

die Überlastmembran (6) einen geschlossenen äußeren Rand und einen geschlossenen inneren Rand aufweist und entlang deren äußerem und deren innerem Rand fest eingespannt ist, so daß der innere Rand und der äußere Rand der Überlastmembran (6) nicht gegeneinander auslenkbar sind.

**2.** Differenzdruckaufnehmer nach Anspruch 1, bei dem die Überlastmembran (6) ringscheibenförmig ist.

**3.** Differenzdruckaufnehmer nach Anspruch 1, bei dem jede Überlastkammer (23, 33) durch die Überlastmembran (6) und eine dieser gegenüberliegende im wesentlichen konkave Wand begrenzt sind.

**4.** Differenzdruckaufnehmer nach Anspruch 1, bei dem eine der Leitungen (25) durch die Mitte der Überlastmembran (6) hindurchgeführt ist.

## Claims

**1.** A differential pressure sensor having

- a sensor element (1),
- a first and a second pressure measurement chamber (2, 3), each of which is adjacent the sensor element (1),
- a first pressure receiving chamber (22) closed off by a first separating diaphragm (21),
- a second pressure receiving chamber (32) closed off by a second separating diaphragm (31),
- a first overload chamber (23),

  - which is connected to the first pressure receiving chamber (22) by a first conduit (24), and
  - which is connected to the first pressure measurement chamber (2) by a second conduit (25),

- a second overload chamber (33),

  - which is connected to the second pressure receiving chamber (32) by a third conduit (34), and
  - which is connected to the second pressure measurement chamber (3) by a fourth conduit (35),

- a fluid filling the first and the second pressure receiving chamber (2, 3 *[sic - recte 22, 32]*), the first and the second overload chamber (23, 33), the first and the second pressure measurement chamber (2, 3), and also the first, the second, the third and the fourth conduit (24, 25, 34, 35), and

- an overload diaphragm (6),

  - by which the first and the second overload chambers (23, 33) are mutually separated,

the overload diaphragm (6) having a closed outer edge and a closed inner edge and being firmly clamped along its outer and its inner edge so that the inner edge and the outer edge of the overload diaphragm (6) cannot be deflected towards each other.

**2.** A differential pressure sensor according to claim 1, wherein the overload diaphragm (6) is in the form of an annular disc.

**3.** A differential pressure sensor according to claim 1, wherein each overload chamber (23, 33) is delimited by the overload diaphragm (6) and by a substantially concave wall arranged facing the said overload diaphragm.

**4.** A differential pressure sensor according to claim 1, wherein one of the conduits (25) leads through the centre of the overload diaphragm (6).

## Revendications

**1.** Capteur de différence de pression avec

- un élément capteur (1)
- une première et une deuxième chambre de mesure de pression (2, 3) contiguë à chaque fois à l'élément capteur (1)
- une première chambre de réception de pression (22) fermée par une première membrane de séparation (21),
- une deuxième chambre de réception (32) fermée par une deuxième membrane de séparation (31),
- une première chambre de surcharge (23),

  - qui est reliée avec une première conduite (24) à la première chambre de réception de pression (22) et
  - qui est reliée avec une deuxième conduite (25) à la première chambre de mesure de pression (2)

- une deuxième chambre de surcharge (33),

  - qui est reliée par une troisième conduite (34) à la deuxième chambre de réception de pression (32) et

- qui est reliée avec une quatrième conduite (35) à la deuxième chambre de mesure de pression (3),

- un liquide pour le remplissage de la première et de la deuxième chambre de réception de pression (2, 3), la première et la deuxième chambre de surcharge (23, 33), la première et la deuxième chambre de mesure de pression (2, 3) ainsi que la première, la deuxième, la troisième et la quatrième conduite (24, 25, 34, 35), et
- une membrane de surcharge (6),

- par laquelle la première et la deuxième chambre de surcharge (23, 33) sont séparées l'une de l'autre ; où

la membrane de surcharge (6) présente un bord externe fermé et un bord interne fermé et est serré fermement le long du bord externe et interne de ladite membrane de manière à ce que le bord externe et interne de la membrane de surcharge (6) ne puissent pas être déviés l'un par rapport à l'autre.

2. Le capteur de différence de pression selon la revendication 1, dans lequel la membrane de surcharge (6) a la forme d'un disque annulaire.

3. Le capteur de différence de pression selon la revendication 1, dans lequel chaque chambre de surcharge (23, 33) est limitée par la membrane de surcharge (6) et par une paroi essentiellement concave faisant face à ladite membrane de surcharge.

4. Le capteur de différence de pression selon la revendication 1, dans lequel une des conduites (25) est conduite à travers le centre de la membrane de surcharge (6).

# Fig.1

Fig.2

Fig.3

Fig.4

Fig.5

Fig.6

Fig.7